# EUROPEAN PATENT SPECIFICATION

(11) **EP 4 122 131 B1**
(45) Date of publication and mention of the grant of the patent: **18.02.2026**
(21) Application number: 21717711.2
(22) Date of filing: 17.03.2021
(51) Int. Cl.: H04L 1/1867, H04L 5/00

(54) **RECEPTION RULES FOR REVOKED CANCELLATION**
EMPFANGSREGELN FÜR WIDERRUFENE UNTERDRÜCKUNG
RÈGLES DE RÉCEPTION POUR UNE ANNULATION RÉVOQUÉE

(30) Priority: 19.03.2020 US 202062992088 P; 16.03.2021 US 202117203175
(43) Date of publication of application: 25.01.2023
(73) Proprietor: QUALCOMM INCORPORATED, San Diego, California 92121-1714 (US)
(72) Inventor: ZHOU, Yan, San Diego, California 92121-1714 (US); SUN, Jing, San Diego, California 92121-1714 (US); ZHANG, Xiaoxia, San Diego, California 92121-1714 (US); LUO, Tao, San Diego, California 92121-1714 (US); HOSSEINI, Seyedkianoush, San Diego, California 92121-1714 (US); GAAL, Peter, San Diego, California 92121-1714 (US); MONTOJO, Juan, San Diego, California 92121-1714 (US); KHOSHNEVISAN, Mostafa, San Diego, California 92121-1714 (US)
(74) Representative: Jaeger, Michael David
(86) International application number: PCT/US2021/022795
(87) International publication number: WO 2021/188697

(56) References cited:
- WO-A1-2009/134196
- US-A1- 2009 092 066
- US-A1- 2018 351 705
- US-A1- 2019 254 088
- US-A1- 2020 059 947
- US-A1- 2020 077 297
- QUALCOMM INCORPORATED: "Uplink Inter-UE Tx Multiplexing and Prioritization", vol. RAN WG1, no. Chongqing, China; 20191014 - 20191020, 8 October 2019 (2019-10-08), XP051809292, Retrieved from the Internet <URL:https://ftp.3gpp.org/tsg_ran/WG1_RL1/TSGR1_98b/Docs/R1-1911122.zip R1-1911122 Uplink inter-UE Tx Multiplexing and Prioritization.docx> [retrieved on 20191008]

## Description

### BACKGROUND

### Technical Field

The present disclosure relates to an apparatus and a method of handling cancellation indicators based on reception rules for revoked cancellation.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

QUALCOMM INCORPORATED: "Uplink Inter-UE Tx Multiplexing and Prioritization", 3GPP DRAFT; Rl-1911122; UPLINK INTER-UE TX MULTIPLEXING AND PRIORITIZATION, 3RD GENERATION PARTNERSHIP PROJECT (3GPP), MOBILE COMPETENCE CENTRE; 650, ROUTE DES LUCIOLES; F-06921 SOPHIA-ANTIPOLI, vol. RAN WG1, no. Chongqing, China; 20191014 - 20191020; 8 October 2019 (2019-10-8) discussed some important aspects of the UL cancellation indication design for NR Rel. 16 in details.

WO 2019/134196 discloses a method and an arrangement, such as a UE, for revoking a semi-persistent scheduling grant or assignment, as well as a method and an arrangement, such as an eNB, for establishing revocation of a semi-persistent scheduling grant or assignment. The method for revoking can comprise receiving a second set of physical layer parameters, determining whether at least a subset of the second set of physical layer parameters fulfills a predefined criterion, and revoking the semi-persistent scheduling grant or assignment if the subset of the second set of physical layer parameters fulfills the predefined criterior Other examples of related prior art are US 2020/059947 and US 2009/092066.

### SUMMARY

The invention is defined by the appended independent claims. Advantageous, optional features of the invention are then set out in the appended dependent claims. In the following description, any embodiment referred to and not falling within the scope of the claims is merely an example useful to the understanding of the invention.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect, the present disclosure provides a method, apparatus, and non-transitory computer readable medium for determining whether to receive a scheduled reception after a cancellation indicator. The method may include receiving a message scheduling a first reception for a user equipment (UE) on first resources. The method may include receiving a first indicator scheduling a first transmission from the UE on second resources that at least partially overlap with the first resources. The method may include receiving a second indicator cancelling the first transmission in a region that partially or fully overlaps the second resources. The method may include determining whether to receive the first reception on the first resources.

The present disclosure also provides an apparatus (e.g., a UE) including a memory storing computer-executable instructions and at least one processor configured to execute the computer-executable instructions to perform the above method, an apparatus including means for performing the above method, and a non-transitory computer-readable medium storing computer-executable instructions for performing the above method.

In another aspect, the present disclosure provides a method, apparatus, and non-transitory computer readable medium for determining whether a user equipment (UE) has received a reception after a cancellation indicator. The method may include transmitting a message scheduling a first reception for a UE on first resources. The method may include transmitting a first indicator scheduling a first transmission from the UE on second resources that at least partially overlap the first resources. The method may include transmitting a second indicator cancelling the first transmission in a region that partially or fully overlaps the second resources. The method may include determining whether an acknowledgment indicates a reception status of the first reception.

The disclosure also provides an apparatus (e.g., a base station) including a memory storing computer-executable instructions and at least one processor configured to execute the computer-executable instructions to perform the above method, an apparatus including means for performing the above method, and a non-transitory computer-readable medium storing computer-executable instructions for performing the above method.

To the accomplishment of the foregoing and related ends, the one or more aspects comprise the features hereinafter described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2A is a diagram illustrating an example of a first 5G NR frame.
FIG. 2B is a diagram illustrating an example of DL channels within a 5G NR subframe.
FIG. 2C is a diagram illustrating an example of a second 5G NR frame.
FIG. 2D is a diagram illustrating an example of UL channels within a 5G NR subframe.
FIG. 3 is a diagram illustrating an example of a base station and user equipment (UE) in an access network.
FIG. 4 is a diagram illustrating example scheduling indicators.
FIG. 5 is a diagram illustrating example communications and components a base station and a UE.
FIG. 6 is a conceptual data flow diagram illustrating an example data flow between different means/components in an example UE including a cancellation indicator (CI) component.
FIG. 7 is a conceptual data flow diagram illustrating an example data flow between different means/components in an example base station including a scheduling component.
FIG. 8 is a flowchart of an example method of determining whether to receive a scheduled reception after a cancellation indicator.
FIG. 9 is a flowchart of an example method of scheduling transmissions with a cancellation indicator.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

A cancellation indicator (CI) may be transmitted by a base station to indicate resources on which a user equipment (UE) is not to transmit. For example, the base station may transmit a CI to clear previously scheduled resources for a URLLC communication. When the UE receives a CI, the UE may cancel uplink transmissions including physical uplink shared channel (PUSCH) and sounding reference signal (SRS) transmissions. The UE may proceed with other transmissions such as physical uplink control channel (PUCCH).

Although a CI may be applied to uplink transmissions, a CI may also affect downlink scheduling. For example, a dynamically scheduled uplink transmission may take precedence over a first reception scheduled by higher layers, using semi-persistent scheduling (SPS), for example. When a UE receives an indicator such as a downlink control information (DCI) that dynamically schedules an uplink transmission such as a PUSCH, the UE may cancel a conflicting first reception scheduled via SPS. If the dynamically scheduled uplink transmission is then cancelled by a CI, the UE may be able to receive the original first reception scheduled via SPS. That is, the cancellation of the uplink transmission may revoke the cancellation of the first reception. The reception of the first reception, however, may depend on rules for whether the base station transmits the first reception after the revoked cancellation and whether the UE receives and acknowledges the first reception.

In an aspect of the present disclosure, a UE may receive a message, such as an SPS configuration message, scheduling a first reception on first resources. The UE may receive a first indicator (e.g., a DCI) scheduling a first transmission on second resources that at least partially overlap with the first resources. The UE may receive a second indicator (e.g., a CI) cancelling the first transmission in a region that partially or fully overlaps the second resources. The UE may determine whether to receive the first reception on the first resources. In an aspect, the UE may determine whether to receive the first reception based on one or more rules. According to a first rule, the UE may receive the first reception because the CI has cancelled uplink transmissions, so the UE is able to receive the originally scheduled reception. According to a second rule, the UE may not process the first reception. If the first reception is part of a repeated transmission, the UE may process other repetitions and transmit an acknowledgment based on a decoding result of the other repetitions. If the first reception is not repeated, the UE may transmit a negative acknowledgment or no acknowledgment for the first reception. According to a third rule, cancellation of a dynamically scheduled uplink transmission may be prohibited.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media, which may be referred to as non-transitory computer-readable media. Non-transitory computer-readable media may exclude transitory signals. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

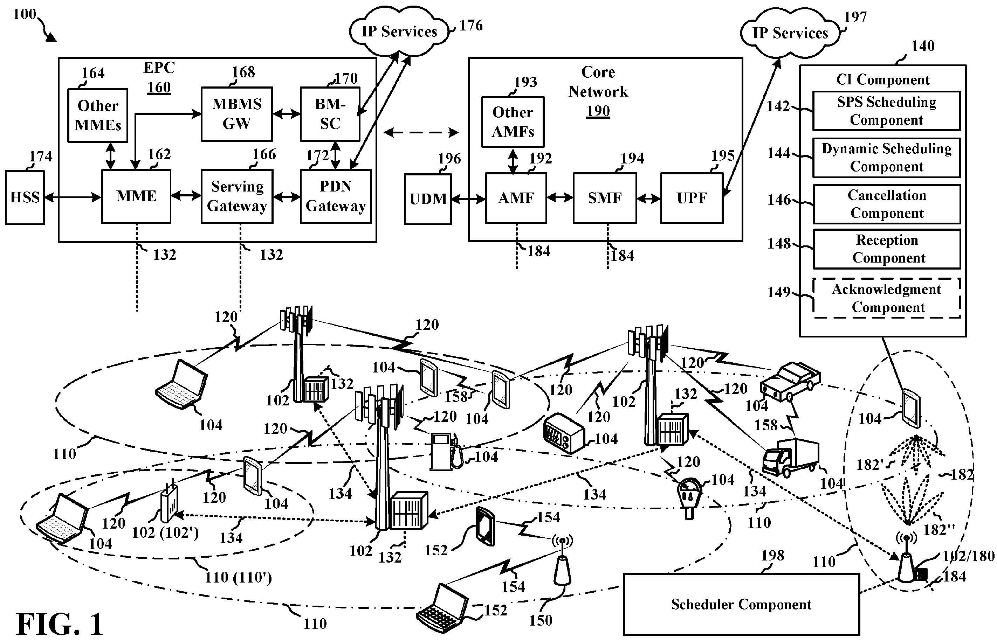

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

In an aspect, one or more of the UEs 104 may include a CI component 140 for determining whether to receive a scheduled reception after receiving a CI. The CI component 140 may include a SPS scheduling component 142 that receives a message scheduling a first reception on first resources. The CI component 140 may include a dynamic scheduling component 144 that receives a first indicator scheduling a first transmission on second resources that at least partially overlap with the first resources. The CI component 140 may include a cancellation component 146 that receives a second indicator cancelling the first transmission in a region that partially or fully overlaps the second resources. The CI component 140 may include a reception component 148 that determines whether to receive the first reception on the first resources. The CI component 140 may optionally include an acknowledgment component 149 that may transmit an acknowledgment of the first reception.

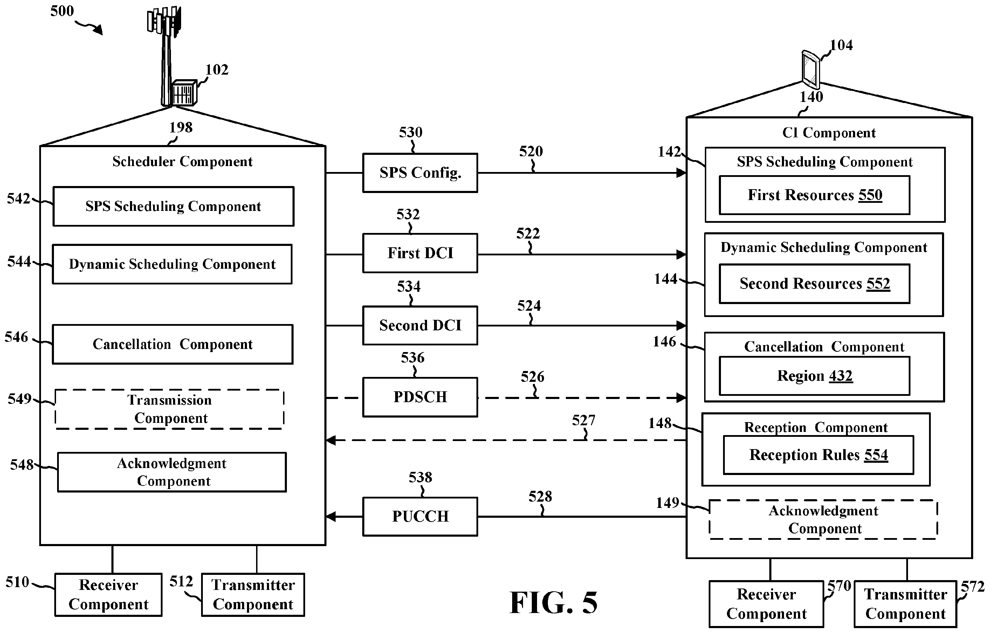

In an aspect, one or more of the base stations 102 may including a scheduler component 198 that determines whether a UE 104 receives a reception after a CI. As illustrated in FIG. 5, the scheduler component 198 may include a SPS scheduling component 542 that transmits a message (e.g., an SPS configuration) scheduling a first reception for the UE on first resources. The scheduler component 198 may include a dynamic scheduling component 544 that transmits a first indicator scheduling a first transmission from the UE 104 on second resources that at least partially overlap with the first resources. The scheduler component 198 may include a cancellation component 546 that transmits a second indicator cancelling the first transmission in a region that partially or fully overlaps the second resources. The scheduler component 198 may include an acknowledgment component 548 that determines whether an acknowledgment indicates a reception status of the first reception. The scheduler component 198 may optionally include a transmission component 549 that transmits the first reception.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface), which may be wired or wireless. The base stations 102 configured for 5G NR (collectively referred to as Next Generation RAN (NG-RAN)) may interface with core network 190 through second backhaul links 184, which may be wired or wireless. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the Institute of Electrical and Electronics Engineers (IEEE 802.11) standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" (mmW) band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band. Communications using the mmW radio frequency band have extremely high path loss and a short range. The mmW base station 180 may utilize beamforming 182 with the UE 104 to compensate for the path loss and short range.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a packet switched (PS) Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the following description may be focused on 5G NR, the concepts described herein may be applicable to other similar areas, such as LTE, LTE-A, CDMA, GSM, and other wireless technologies.

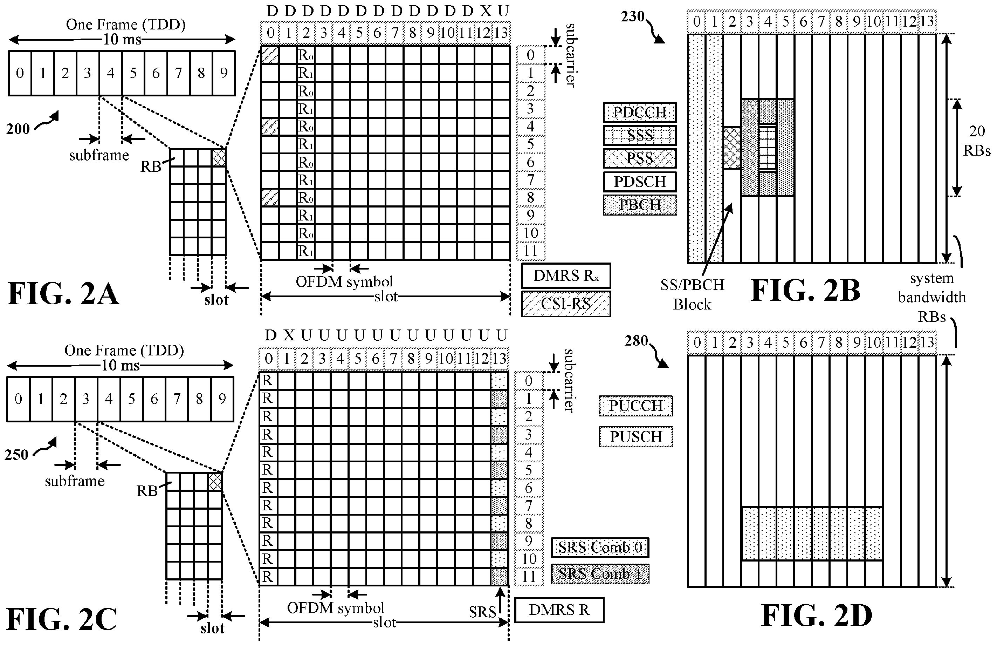

FIG. 2A is a diagram 200 illustrating an example of a first subframe within a 5G/NR frame structure. FIG. 2B is a diagram 230 illustrating an example of DL channels within a 5G/NR subframe. FIG. 2C is a diagram 250 illustrating an example of a second subframe within a 5G/NR frame structure. FIG. 2D is a diagram 280 illustrating an example of UL channels within a 5G/NR subframe. The 5G/NR frame structure may be frequency domain duplexed (FDD) in which for a particular set of subcarriers (carrier system bandwidth), subframes within the set of subcarriers are dedicated for either DL or UL, or may be time domain duplexed (TDD) in which for a particular set of subcarriers (carrier system bandwidth), subframes within the set of subcarriers are dedicated for both DL and UL. In the examples provided by FIGs. 2A, 2C, the 5G/NR frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G/NR frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 kHz, where *µ* is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGs. 2A-2D provide an example of slot configuration 0 with 14 symbols per slot and numerology µ=2 with 4 slots per subframe. The slot duration is 0.25 ms, the subcarrier spacing is 60 kHz, and the symbol duration is approximately 16.67 µs.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rₓ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) ACK/NACK feedback. The PUSCH carries data, and may additionally be used to carry a buffer status report (BSR), a power headroom report (PHR), and/or UCI.

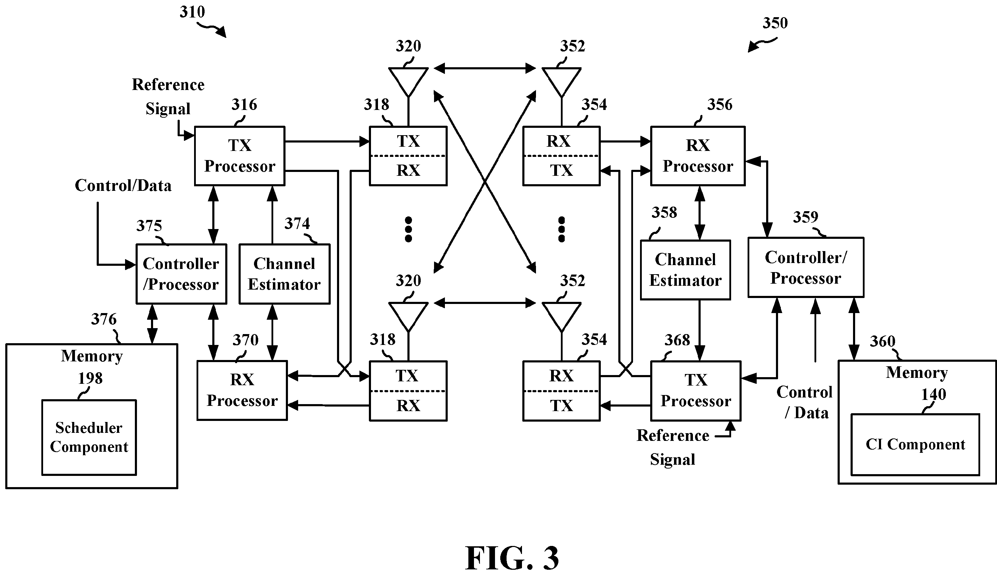

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with, and coupled to, a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an acknowledge (ACK) and/or negative acknowledge (NACK) protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with, and coupled to, a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the CI component 140 of FIG. 1. For example, the memory 360 may include executable instructions defining the CI component 140. The TX processor 368, the RX processor 356, and/or the controller/processor 359 may be configured to execute the CI component 140.

At least one of the TX processor 316, the RX processor 370, and the controller/processor 375 may be configured to perform aspects in connection with the scheduler component 198 of FIG. 1. For example, the memory 376 may include executable instructions defining the scheduler component 198. The TX processor 316, the RX processor 370, and/or the controller/processor 375 may be configured to execute the scheduler component 198.

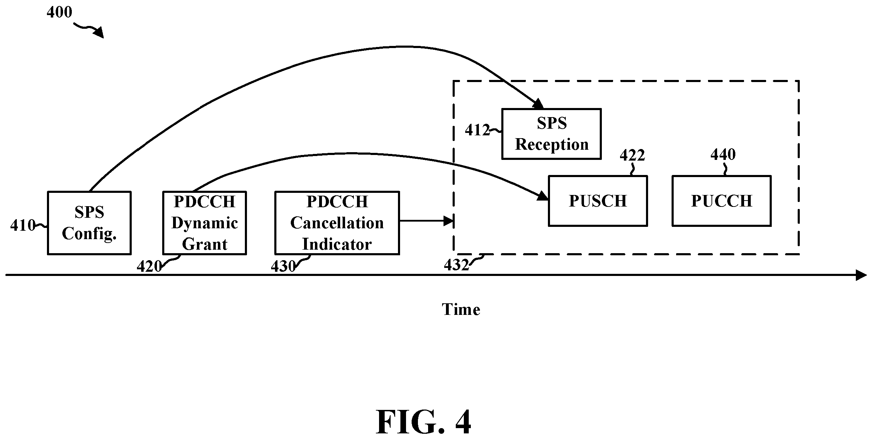

FIG. 4 is a timing diagram 400 including example communications between a UE 104 and a base station 102. The UE 104 may receive a message such as SPS configuration 410 that schedules a first reception such as SPS reception 412 by the UE 104. The SPS reception 412 may be, for example, a periodic reception on first resources. The resources may refer to time domain resources (e.g., slots or symbols) and frequency domain resources (e.g., subcarriers, resource elements, or resource blocks).

The UE 104 may receive a first indication such as PDCCH dynamic grant 420 for a first transmission such as PUSCH 422 from the UE 104. The PDCCH dynamic grant 420 may be, for example, a DCI having DCI format 0_0 or 0_1. The PUSCH 422 may be scheduled on second resources that overlap with the first resources for SPS reception 412. For example, the PUSCH 422 may be scheduled on at least some of the same symbols as the SPS reception 412. The UE 104 may be unable to concurrently transmit and receive, so the UE 104 may cancel the SPS reception 412 in favor of the dynamically scheduled PUSCH 422, which may have higher priority.

The UE 104 may receive a PDCCH cancellation indicator (CI) 430. For example, the PDCCH CI 430 may be a DCI having DCI format 2_4. The PDCCH CI 430 may indicate a region 432 in which certain uplink transmissions are cancelled. For example, the PDCCH CI 430 may indicate the PUSCH transmissions such as PUSCH 422 are to be cancelled. In an aspect, the PDCCH CI 430 may not apply to certain uplink transmissions within the region 432 such as a PUCCH 440. Accordingly, after the PDCCH cancellation indicator 430, there may be no uplink transmission overlapping the SPS reception 412. That is, the PDCCH cancellation indicator 430 may revoke the cancellation of the SPS reception 412. Therefore, the UE 104 may be able to receive the SPS reception 412. The UE may determine whether to receive the SPS reception 412 based on reception rules.

FIG. 5 is a diagram 500 illustrating example communications and components of a base station 102 and a UE 104. The base station 102 includes the scheduler component 198 and the UE 104 includes the CI component 140. The scheduler component 198 may be implemented by the memory 376 and the TX processor 316, the RX processor 370, and/or the controller/processor 375 of FIG. 3. For example, the memory 376 may store executable instructions defining the scheduler component 198 and the TX processor 316, the RX processor 370, and/or the controller/processor 375 may execute the instructions. The CI component 140 may be implemented by the memory 360 and the TX processor 368, the RX processor 356, and/or the controller/processor 359. For example, the memory 360 may store executable instructions defining the CI component 140 and the TX processor 368, the RX processor 356, and/or the controller/processor 359 may execute the instructions.

The base station 102 may include a receiver component 510, which may include, for example, a radio frequency (RF) receiver for receiving the signals described herein. The base station 102 may include a transmitter component 512, which may include, for example, an RF transmitter for transmitting the signals described herein. In an aspect, the receiver component 510 and the transmitter component 512 may co-located in a transceiver such as illustrated by the TX/RX 318 in FIG. 3.

As discussed briefly above with respect to FIG. 1, the scheduler component 198 may include the SPS scheduling component 542, the dynamic scheduling component 544, the cancellation component 546, the acknowledgment component 548 and the optional transmission component 549.

The SPS scheduling component 542 may schedule the UE 104 to periodically receive a reception 526 on first resources. For example, the reception 526 may be a PDSCH 536. The SPS scheduling component 542 may transmit a message 520, which may be a SPS configuration 530. The message 520 or the SPS configuration 530 may be a higher layer message (e.g., RRC layer) that schedules the UE 104 to periodically receive the first reception 526 (e.g., PDSCH 536) on the first resources. That is, the UE 104 may be scheduled to receive the first reception 526 on specified frequency domain resources on periodic time domain resources. The first reception 526 or PDSCH 536 may correspond to the SPS reception 412 in FIG. 4.

The dynamic scheduling component 544 may transmit a first indicator 522 that schedules a first transmission 527 from the UE 104 on second resources that at least partially overlap with the first resources. For example, the first indicator 522 may be a first DCI 532. The first DCI 532 may have a DCI format of 0_0 or 0_1 for uplink transmissions. In an implementation, the first indicator 522 may schedule a sidelink transmission to another UE 104. The first DCI 532 may correspond to the PDCCH dynamic grant 420 in FIG. 4, and the first transmission 527 may correspond to the PUSCH 422 in FIG. 4. As illustrated in FIG. 4, the time domain resources for the PUSCH 422 overlap with the time domain resources for the SPS reception 412.

The cancellation component 546 may transmit a second indicator 524 cancelling the first transmission 527 in a region 432 that at least partially overlaps the second resources. For example, the cancellation component 546 may transmit a second DCI 534 having a DCI format 2_4, which may be referred to as a cancellation indicator or CI. The second DCI 534 may indicate a region 432, which may be a group of resources (e.g., the region may be indicated by symbols or resources blocks (RBs)) on which certain uplink transmissions are cancelled. In particular, a CI may be applicable to PUSCH and SRS transmissions. As illustrated in FIG. 4, the region 432 completely overlaps the PUSCH 422. Even if the region 432 only partially overlaps a PUSCH, the PUSCH may be cancelled because an incomplete transmission may be more likely not to be decoded correctly. The cancellation component 546 may transmit the second DCI 534 in order to free up resources for another transmission such as a URLLC transmission (not shown).

The transmission component 549 may optionally transmit the first reception 526 (e.g. PDSCH 536). For example, transmission of the first reception 526 may depend on a rule for receptions after a cancellation indicator. According to a first rule, the base station 102 and/or the transmission component 549 may transmit the first reception 526 as the PDSCH 536. Because the UE 104 was scheduled to receive the first reception 526 (e.g., PDSCH 536) and the conflicting first transmission 527 has been cancelled, the UE 104 may be able to receive the PDSCH 536. In another aspect, according to a second rule, the base station 102 and/or the transmission component 549 may not transmit the first reception 526. For instance, because the scheduler component 198 transmitted the second DCI 534 in order to free up resources for another transmission, the scheduler component 198 may use those resources for the other transmission instead of the first reception 526. According to a third rule, the base station 102 may be prohibited from cancelling the dynamically scheduled uplink first transmission 527.

As discussed above, the UE 104 or the CI component 140 may include the SPS scheduling component 142, the dynamic scheduling component 144, the cancellation component 146, the reception component 148 and the optional acknowledgment component 149. The UE 104 may include a receiver component 570, which may include, for example, a RF receiver for receiving the signals described herein. The UE 104 or the CI component 140 may include a transmitter component 572, which may include, for example, an RF transmitter for transmitting the signals described herein. In an aspect, the receiver component 570 and the transmitter component 572 may co-located in a transceiver such as the TX/RX 352 in FIG. 3.

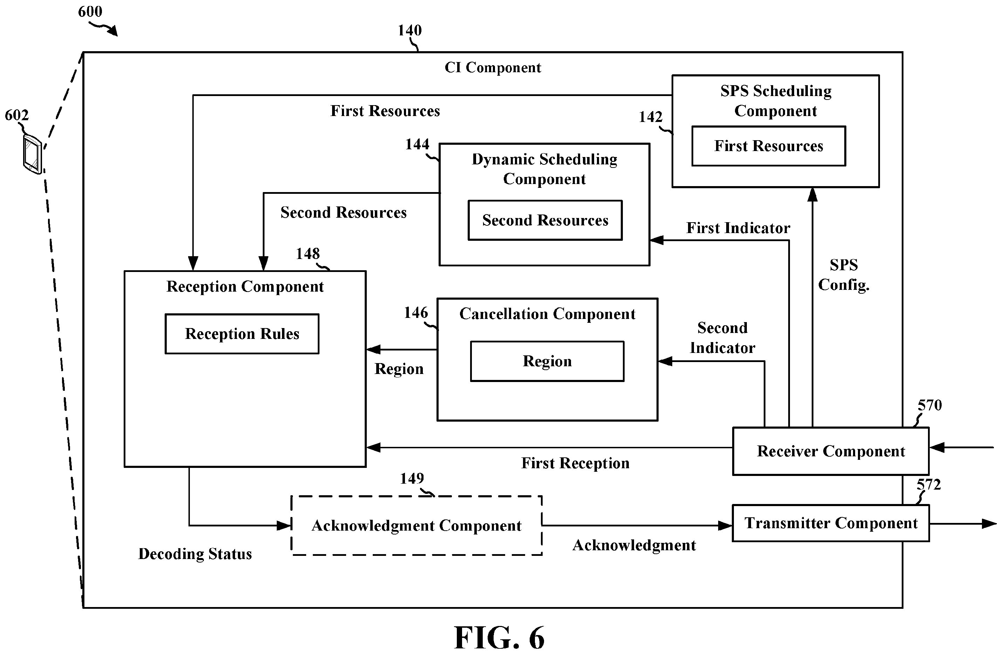

FIG. 6 is a conceptual data flow diagram 600 illustrating the data flow between different means/components in an example UE 602, which may be an example of the UE 104 (or UE 350) including the CI component 140 with reference to FIGs. 1, 3, and 5.

The receiver component 570 may receive various signals including the message 520 (e.g., SPS configuration 530), first indicator 522 (e.g., first DCI 532), second indicator 524 (e.g. second DCI 534), and first reception 526 (e.g., PDSCH 536). The receiver component 570 may provide the message 520 to the SPS scheduling component 142. The receiver component 570 may provide the first indicator 522 to the dynamic scheduling component 144. The receiver component 570 may provide the second indicator 524 to the cancellation component 146. The receiver component 570 may provide the first reception to the reception component 148.

The SPS scheduling component 142 may receive the message 520, which may be an SPS configuration 530. The SPS scheduling component 142 may determine the first resources 550 based on the message 520. For example, the SPS scheduling component 142 may decode the SPS configuration and identify an information element defining the first resources 550. The SPS scheduling component 142 may provide the first resources 550 to the reception component 148.

The dynamic scheduling component 144 may receive the first indicator 522, which may be the first DCI 532. The dynamic scheduling component 144 may perform blind decoding on the first DCI 532 to determine the second resources 552. The dynamic scheduling component 144 may provide the second resources 552 to the reception component 148 as an indication to cancel any overlapping receptions (e.g., reception 526 on the first resources 550).

The cancellation component 146 may receive the second indicator 524, which may be the second DCI 534. The cancellation component 146 may perform blind decoding on the second DCI 534 to determine the region 432. The cancellation component 146 may provide the region 432 to the reception component 148 as an indication of resources of cancelled transmissions.

The reception component 148 may receive the first resources 550 from the SPS scheduling component 142 and the second resources from the dynamic scheduling component 144. The reception component 148 may also receive the region 432 from the cancellation component 146. The reception component 148 may evaluate reception rules 554 to determine whether to receive the first reception 526. The reception component 148 may determine whether the second resources 552 overlap the first resources 550 to determine whether the first transmission 527 conflicts with the first reception 526. The reception component 148 may determine whether the region 432 partially or fully overlaps the second resources 552 to determine whether the first transmission 527 is cancelled. If the first transmission 527 is cancelled, the reception component 148 may determine whether to receive the first reception 526 based on a configured reception rule, which may be the first rule or the second rule.

The acknowledgment component 149 may receive a reception status from the reception component 148. The reception status may indicate whether the first reception 526 was correctly decoded. The acknowledgment component 149 may determine whether to transmit an acknowledgment for the first reception 526 based on the reception rules 554. According to the first rule, when the reception component 148 receives the first reception 526, the acknowledgment component 149 may transmit an acknowledgment based on the reception status. According to the second rule, when the reception component 148 does not receive the first reception 526, the acknowledgment component 149 may transmit a negative acknowledgment, or may transmit an acknowledgment according to a HARQ codebook without a bit corresponding to the first reception 526. In an implementation, the first reception 526 may be one of multiple repetitions of a PDSCH 536. One or more of the multiple repetitions may not be canceled. Accordingly, the reception component 148 may determine a reception status based on the non-cancelled repetitions. The acknowledgment component 149 may determine whether to transmit the reception status based on the non-cancelled repetitions for the first reception 526 based on the HARQ codebook.

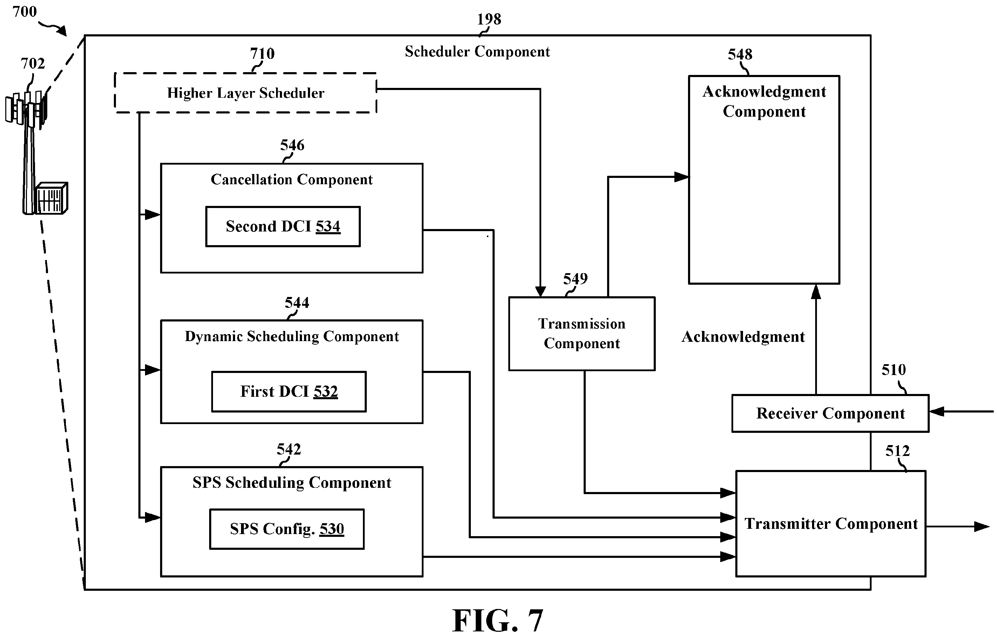

FIG. 7 is a conceptual data flow diagram 700 illustrating the data flow between different means/components in an example base station 702, which may be an example of the base station 102 (or base station 310) and include the scheduler component 198 with reference to FIGs. 1, 3, and 5.

The scheduler component 198 may include a higher layer scheduler 710 that determines transmissions and receptions for one or more UEs. The higher layer scheduler 710 may control the SPS scheduling component 542, the dynamic scheduling component 544, and the cancellation component 546 to transmit messages and indicators to the UEs 104 to schedule and cancel the transmissions and reception.

The SPS scheduling component 542 may generate a message 520 (e.g., SPS configuration 530) scheduling a first reception for the UE 104 on first resources. The SPS scheduling component 542 may transmit the message 520 via the transmitter component 512.

The dynamic scheduling component 544 may generate a first indicator 522 (e.g., first DCI 532) scheduling a first transmission from a UE 104 on second resources. The dynamic scheduling component 544 may transmit the first indicator 522 via the transmitter component 512.

The cancellation component 546 may generate a second indicator 524 (e.g., second DCI 534) indicating a region on which transmissions are cancelled. The cancellation component 546 may transmit the second indicator 524 via the transmitter component 512.

The transmission component 549 may determine whether to transmit the first reception. In an implementation, the transmission component 549 may receive an indication of whether to transmit the first reception from the higher layer scheduler 710. In another implementation, the transmission component 549 may monitor the SPS scheduling component 542, the dynamic scheduling component 544, and the cancellation component 546 to determine which messages and indicators have been transmitted to a UE 104. The transmission component 549 may determine whether the first reception has been reinstated following transmission of the second DCI 534. The transmission component 549 may transmit the first reception via the transmitter component 512. The transmission component 549 may provide an indication of the transmission to the acknowledgment component 548.

The receiver component 510 may receive an acknowledgment 528 from a UE 104. The acknowledgment may be carried by a PUCCH 538. The receiver component 510 may provide the acknowledgment 528 to the acknowledgment component 548.

The acknowledgment component 548 may receive the acknowledgment 528 from the receiver component 510. The acknowledgment component 548 may determine whether the acknowledgment 528 includes an acknowledgment for the first reception 526. The acknowledgment component 548 may determine whether the acknowledgment 528 includes an acknowledgment for the first reception 526 based on the reception rules 554. For example, according to the first rule, the acknowledgment component 548 may determine that the acknowledgment 528 includes an acknowledgment for the first reception 526 when the first reception 526 is transmitted. According to the second rule, the acknowledgment component 548 may determine that the acknowledgment 528 includes a negative acknowledgment for the first reception 526 or the acknowledgment 528 includes no bits for the first reception 526 according to a HARQ codebook. Alternatively, if the first reception 526 is one of multiple repetitions, the acknowledgment 528 may include an acknowledgment for the other repetitions.

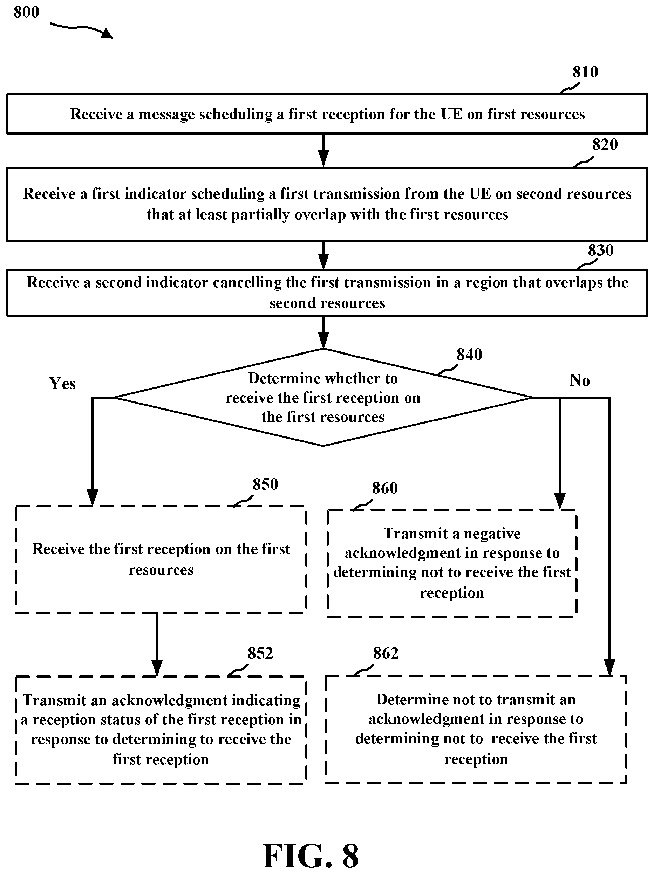

FIG. 8 is a flowchart of an example method 800 for determining whether to receive a first reception after a CI. The method 800 may be performed by a UE (such as the UE 104, which may include the memory 360 and which may be the entire UE 104 or a component of the UE 104 such as the CI component 140, TX processor 368, the RX processor 356, or the controller/processor 359). The method 800 may be performed by the CI component 140 in communication with the scheduler component 198 of the base station 102.

At block 810, the method 800 may include receiving a message scheduling a first reception for the UE on first resources. In an aspect, for example, the UE 104, the RX processor 356 and/or the controller/processor 359 may execute CI component 140 and/or the SPS scheduling component 142 to receive a message 520 scheduling a first reception 526 on first resources 550. In an implementation, the message 520 is a SPS configuration scheduling a periodic first reception. Accordingly, the UE 104, the RX processor 356, and/or the controller/processor 359 executing the CI component 140 and/or the SPS scheduling component 142 may provide means for receiving a message scheduling a first reception on first resources.

At block 820, the method 800 may include receiving a first indicator scheduling a first transmission from the UE on second resources that at least partially overlap with the first resources. In an aspect, for example, the UE 104, the RX processor 356 and/or the controller/processor 359 may execute CI component 140 and/or the dynamic scheduling component 144 to receive a first indicator 522 scheduling a first transmission 527 on second resources 552 that at least partially overlap with the first resources 550. In an implementation, the first transmission is an uplink transmission. The first indicator may be a downlink control information (e.g., first DCI 532). Accordingly, the UE 104, the RX processor 356, and/or the controller/processor 359 executing the CI component 140 and/or the dynamic scheduling component 144 may provide means for receiving a first indicator scheduling a first transmission on second resources that at least partially overlap with the first resources.

At block 830, the method 800 may include receiving a second indicator cancelling the first transmission in a region that partially or fully overlaps the second resources. In an aspect, for example, the UE 104, the RX processor 356 and/or the controller/processor 359 may execute CI component 140 and/or the cancellation component 146 to receive a second indicator 524 cancelling the first transmission 527 in a region 432 that partially or fully overlaps the second resources 552. The second indicator may be a downlink control information (e.g., second DCI 534). Accordingly, the UE 104, the RX processor 356, and/or the controller/processor 359 executing the CI component 140 and/or the cancellation component 146 may provide means for receiving a second indicator cancelling the first transmission in a region that partially or fully overlaps the second resources.

It is noted that, in cases where the first transmission scheduled in block 820 has a higher priority than the first reception scheduled with reference to block 810, had the second indicator cancelling the first transmission received in block 830 not been received, presumably, the UE would have ignored or not decoded the first reception scheduled with reference to block 810. However, given that the second indicator of block 830 is received cancelling the first transmission scheduled in block 820, the UE is faced with the question of whether to now receive or not receive the first reception scheduled with reference to block 810.

At block 840, the method 800 may include determining whether to receive the first reception on the first resources. In an aspect, for example, the UE 104, the RX processor 356 and/or the controller/processor 359 may execute CI component 140 and/or the reception component 148 to determine whether to receive the first reception 526 on the first resources 550. If the reception component 148 determines to receive the first reception 526, the method 800 may proceed to block 850. If the reception component 148 determines not to receive the first reception 526, the method 800 may proceed to block 860 or block 862. Accordingly, the UE 104, the RX processor 356, and/or the controller/processor 359 executing the CI component 140 and/or the reception component 148 may provide means for determining whether to receive the first reception on the first resources.

At block 850, the method 800 may optionally include receiving the first reception on the first resources. In an aspect, for example, the UE 104, the RX processor 356 and/or the controller/processor 359 may execute CI component 140 and/or the reception component 148 to receive the first reception 526 on the first resources 550. For example, the reception component 148 may control the receiver component 570 to receive any signals transmitted on the first resources 550. The reception component 148 may decode the received signals to determine a reception status of the first reception 526. In an aspect, the reception component 148 may receive at least one repetition of the first reception. The reception component 148 may determine that the at least one repetition of the first reception is repeated on resources that do not overlap with the second resources. Accordingly, the UE 104, the RX processor 356, and/or the controller/processor 359 executing the CI component 140 and/or the reception component 148 may provide means for receiving the first reception on the first resources.

At block 852, the method 800 may optionally include transmitting an acknowledgment indicating a reception status of the first reception in response to determining to receive the first reception. In an aspect, for example, the UE 104, the RX processor 356 and/or the controller/processor 359 may execute CI component 140 and/or the acknowledgment component 149 to transmit an acknowledgment 528 indicating a reception status of the first reception 526 in response to determining to receive the first reception 526. In an aspect, according to the first rule, the acknowledgment component 149 may transmit an acknowledgment indicating a reception status according to a decoding result of the first reception. In another aspect, according to the second rule, when the first reception is repeated on non-cancelled resources, the acknowledgment component 149 may transmit the acknowledgment indicating a reception status according to a decoding result of the at least one repetition of the first reception that does not overlap with the second resources. Accordingly, the UE 104, the RX processor 356, and/or the controller/processor 359 executing the CI component 140 and/or the SPS scheduling component 142 may provide means for transmitting an acknowledgment indicating a reception status of the first reception in response to determining to receive the first reception.

At block 860, the method 800 may optionally include transmitting a negative acknowledgment in response to determining not to receive the first reception. In an aspect, for example, the UE 104, the RX processor 356 and/or the controller/processor 359 may execute CI component 140 and/or the acknowledgment component 149 to transmit a negative acknowledgment in response to determining not to receive the first reception. In an aspect, according to the second rule, the acknowledgment component 149 may transmit a negative acknowledgment of the first reception or an acknowledgment without a bit for the first reception when the first reception is not repeated. In another aspect, when the first reception is repeated on resources that overlap the second resources, the acknowledgment component 149 may determine that the one or more repetitions of the first reception are repeated on resources that overlap with the second resources and transmit a negative acknowledgment of the first reception for the one or more repetitions that overlap with the second resources or an acknowledgment without a bit for the first reception for the one or more repetitions that overlap with the second resources. Accordingly, the UE 104, the RX processor 356, and/or the controller/processor 359 executing the CI component 140 and/or the acknowledgment component 149 may provide means for transmitting a negative acknowledgment in response to determining not to receive the first reception.

At block 862, the method 800 may optionally include determining not to transmit an acknowledgment in response to determining not to receive the first reception. In an aspect, for example, the UE 104, the RX processor 356 and/or the controller/processor 359 may execute CI component 140 and/or the acknowledgment component 149 to determine not to transmit an acknowledgment in response to determining not to receive the first reception. In an aspect, the acknowledgment component 149 may determine not to transmit an acknowledgment when the first reception is not repeated or is repeated on resources that overlap the second resources. Accordingly, the UE 104, the RX processor 356, and/or the controller/processor 359 executing the CI component 140 and/or the acknowledgment component 149 may provide means for determining not to transmit an acknowledgment in response to determining not to receive the first reception.

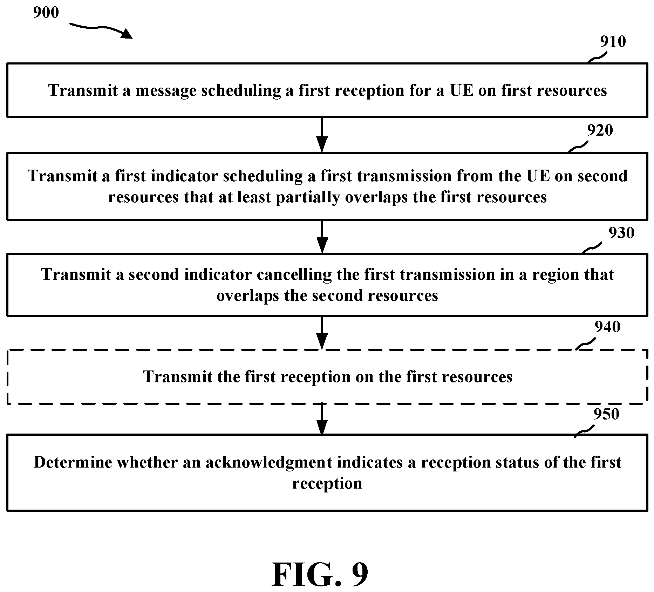

FIG. 9 is a flowchart of an example method 900 for determining whether a second reception is received after a CI. The method 900 may be performed by a base station (such as the base station 102, which may include the memory 376 and which may be the entire base station 102 or a component of the base station 102 such as the scheduler component 198, TX processor 316, the RX processor 370, or the controller/processor 375). The method 900 may be performed by the scheduler component 198 in communication with the CI component 140 of the UE 104.

At block 910, the method 900 may include transmitting a message scheduling a first reception for a UE on first resources. In an aspect, for example, the base station 102, the controller/processor 375, and/or the TX processor 316 may execute the scheduler component 198 and/or the SPS scheduling component 542 to transmit a message 520 scheduling a first reception 526 for a UE 104 on first resources 550. The message 520 may be an SPS configuration 530 scheduling a periodic first reception. Accordingly, the base station 102, the controller/processor 375, and/or the TX processor 316 executing the scheduler component 198 and/or the SPS scheduling component 542 may provide means for transmitting a message scheduling a first reception for a UE on first resources.

At block 920, the method 900 may include transmitting a first indicator scheduling a first transmission from the UE on second resources that at least partially overlap the first resources. In an aspect, for example, the base station 102, the controller/processor 375, and/or the TX processor 316 may execute the scheduler component 198 and/or the dynamic scheduling component 544 to transmit a first indicator 522 scheduling a first transmission 527 from the UE 104 on second resources 552 that at least partially overlap the first resources 550. In an implementation, the first transmission 527 may be an uplink transmission. In another implementation, the first transmission 527 may be a sidelink transmission to another UE. In an implementation, the first indicator 522 may be a downlink control information (e.g., first DCI 532). Accordingly, the base station 102, the controller/processor 375, and/or the TX processor 316 executing the scheduler component 198 and/or the dynamic scheduling component 544 may provide means for transmitting a first indicator scheduling a first transmission from the UE on second resources that at least partially overlap the first resources.

At block 930, the method 900 may include transmitting a second indicator cancelling the first transmission in a region that partially or fully overlaps the second resources. In an aspect, for example, the base station 102, the controller/processor 375, and/or the TX processor 316 may execute the scheduler component 198 and/or the cancellation component 546 to transmit a second indicator 524 cancelling the first transmission in a region 432 that partially or fully overlaps the second resources 552. In an implementation, the second indicator 524 may be a downlink control information (e.g., second DCI 534). Accordingly, the base station 102, the controller/processor 375, and/or the TX processor 316 executing the scheduler component 198 and/or the cancellation component 546 may provide means for transmitting a second indicator cancelling the first transmission in a region that partially or fully overlaps the second resources.

At block 940, the method 900 may optionally include transmitting the first reception on the first resources. In an aspect, for example, the base station 102, the controller/processor 375, and/or the TX processor 316 may execute the scheduler component 198 and/or the transmission component 549 to transmit the first reception 526 on the first resources 550. Accordingly, the base station 102, the controller/processor 375, and/or the TX processor 316 executing the scheduler component 198 and/or the transmission component 549 may provide means for transmitting the first reception on the first resources.

At block 950, the method 900 may include determining whether an acknowledgment indicates a reception status of the first reception. In an aspect, for example, the base station 102, the controller/processor 375, and/or the TX processor 316 may execute the scheduler component 198 and/or the acknowledgment component 548 to determine whether an acknowledgment 528 indicates a reception status of the first reception 526. In an implementation, according to the first rule, the block 950 may include determining that the acknowledgment includes one or more bits indicating a decoding result of the first reception. In another implementation, according to the second rule, the block 950 may include determining that the first reception is not repeated and determining that the acknowledgment is a negative acknowledgment of the first reception or an acknowledgment without a bit for the first reception. In another implementation, according to the second rule, the block 950 may include determining that one or more repetitions of the first reception are repeated on resources that overlap with the second resources and determining that the acknowledgment is a negative acknowledgment of the one or more repetitions of the first reception that overlap with the second resources or an acknowledgment without a bit for the one or more repetitions of the first reception that overlap with the second resources. In another implementation, according to the second rule, the block 950 may include determining that at least one repetition of the first reception is repeated on resources that do not overlap with the second resources and determining that the acknowledgment indicates the reception status according to a decoding result of at least one repetition of the first reception that does not overlap with the second resources. Accordingly, the base station 102, the controller/processor 375, and/or the TX processor 316 executing the scheduler component 198 and/or the acknowledgment component 548 may provide means for determining whether an acknowledgment indicates a reception status of the first reception.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for." The scope of the invention is depicted by the appended claims.

## Claims

1. A method (800) of wireless communication, comprising:
receiving (810) a message scheduling a first reception by a user equipment, UE, using first resources;
receiving (820) a first indicator scheduling a first uplink transmission from the UE on second resources that at least partially overlap with the first resources;
determining to cancel receiving the first reception on the first resources in favor of the scheduled first uplink transmission;
receiving (830) a second indicator indicating a region in which certain uplink transmissions within the region are cancelled, the region including the first uplink transmission, the first resources, and one or more other uplink transmissions, said second indicator cancelling the first uplink transmission on the second resources that at least partially overlap with the first resources, wherein the second indicator does not cancel the one or more other uplink transmissions that do not at least partially overlap with the first resources; and
determining (840) whether to receive the first reception on the first resources, in response to the second indicator cancelling the first uplink transmission, based on reception rules.

2. The method of claim 1, wherein the first message is a semi-persistent scheduling, SPS, configuration scheduling a periodic downlink reception.

3. The method of claim 1, wherein the first and second indicators are downlink control information.

4. The method of claim 1, further comprising transmitting an acknowledgment indicating a reception status of the first reception in response to determining to receive the first reception.

5. The method of claim 4, wherein the acknowledgment can be either a positive acknowledgment or a negative acknowledgment.

6. The method of claim 1, further comprising transmitting a negative acknowledgment in response to determining not to receive the first reception.

7. The method of claim 1, further comprising determining not to transmit an acknowledgment in response to determining not to receive the first reception.

8. The method of claim 1, further comprising:
receiving the first reception using resources of the first resources that do not overlap with the second resources; and
transmitting an acknowledgment indicating a reception status according to a decoding result of the first reception.

9. The method of claim 1, further comprising:
determining that the first reception is not repeated; and
transmitting a negative acknowledgment of the first reception or an acknowledgment without a bit for the first reception.

10. The method of claim 1, wherein determining whether to receive the first reception using the first resources comprises determining not to receive one or more repetitions of the first reception, further comprising:
determining that the one or more repetitions of the first reception are repeated on resources that overlap with the second resources; and
transmitting a negative acknowledgment of the first reception for the one or more repetitions that overlap with the second resources or an acknowledgment without a bit for the first reception for the one or more repetitions that overlap with the second resources.

11. The method of claim 1, wherein determining whether to receive the first reception using the first resources comprises determining to receive at least one repetition of the first reception, further comprising:
determining that the at least one repetition of the first reception is repeated on resources that do not overlap with the second resources; and
transmitting an acknowledgment indicating a reception status according to a decoding result of the at least one repetition of the first reception that does not overlap with the second resources.

12. An apparatus (102/104) for wireless communication, comprising:
a memory storing computer-executable instructions; and
at least one processor coupled to the memory and configured to execute the instructions to perform the method of any one of claims 1 to 11.

## Patentansprüche

1. Ein Verfahren (800) für eine drahtlose Kommunikation, aufweisend:
Empfangen (810) einer Nachricht, die einen ersten Empfang durch ein Benutzergerät (User Equipment bzw. UE) unter Verwendung von ersten Ressourcen plant bzw. einteilt,
Empfangen (820) eines ersten Indikators, der eine erste Uplink-Sendung von dem UE auf zweiten Ressourcen, die wenigstens teilweise mit den ersten Ressourcen überlappen, plant,
Bestimmen des Unterlassens des Empfangens des ersten Empfangs auf den ersten Ressourcen zugunsten der geplanten ersten Uplink-Sendung,
Empfangen (830) eines zweiten Indikators, der einen Bereich, in dem bestimmte Uplink-Sendungen innerhalb des Bereichs aufgegeben bzw. aufgehoben werden, angibt, wobei der Bereich die erste Uplink-Sendung, die ersten Ressourcen und eine oder mehrere andere Uplink-Sendungen enthält, wobei der zweite Indikator die erste Uplink-Sendung auf den zweiten Ressourcen, die wenigstens teilweise mit den ersten Ressourcen überlappen, aufhebt, wobei der zweite Indikator die eine oder die mehreren anderen Uplink-Sendungen, die nicht wenigstens teilweise mit den ersten Ressourcen überlappen, nicht aufhebt, und
Bestimmen (840), ob der erste Empfang auf den ersten Ressourcen empfangen werden soll, in Antwort darauf, dass der zweite Indikator die erste Uplink-Sendung aufhebt, basierend auf den Empfangsregeln.

2. Verfahren nach Anspruch 1, wobei die erste Nachricht eine Semipersistente-Planung (SPS)-Konfiguration, die einen periodischen Downlink-Empfang plant, ist.

3. Verfahren nach Anspruch 1, wobei die ersten und zweiten Indikatoren Downlink-Steuerinformationen sind.

4. Verfahren nach Anspruch 1, das weiterhin das Senden einer Bestätigung, die einen Empfangsstatus des ersten Empfangs angibt, in Antwort auf das Bestimmen des Empfangens des ersten Empfangs aufweist.

5. Verfahren nach Anspruch 4, wobei die Bestätigung entweder eine positive Bestätigung oder eine negative Bestätigung sein kann.

6. Verfahren nach Anspruch 1, das weiterhin das Senden einer negativen Bestätigung in Antwort auf das Bestimmen des nicht-Empfangens des ersten Empfangs aufweist.

7. Verfahren nach Anspruch 1, das weiterhin das Bestimmen des nicht-Sendens einer Bestätigung in Antwort auf das Bestimmen des nicht-Empfangens des ersten Empfangs aufweist.

8. Verfahren nach Anspruch 1, das weiterhin aufweist:
Empfangen des ersten Empfangs unter Verwendung von Ressourcen aus den ersten Ressourcen, die nicht mit den zweiten Ressourcen überlappen, und
Senden einer Bestätigung, die einen Empfangsstatus gemäß einem Decodierungsergebnis des ersten Empfangs angibt.

9. Verfahren nach Anspruch 1, das weiterhin aufweist:
Bestimmen, dass der erste Empfang nicht wiederholt wird, und
Senden einer negativen Bestätigung des ersten Empfangs oder einer Bestätigung ohne ein Bit für den ersten Empfang.

10. Verfahren nach Anspruch 1, wobei das Bestimmen, ob der erste Empfang unter Verwendung der ersten Ressourcen empfangen werden soll, das Bestimmen des nicht-Empfangens einer oder mehrerer Wiederholungen des ersten Empfangs aufweist, wobei das Verfahren weiterhin aufweist:
Bestimmen, dass die eine oder die mehreren Wiederholungen des ersten Empfangs auf Ressourcen, die mit den zweiten Ressourcen überlappen, wiederholt werden, und
Senden einer negativen Bestätigung des ersten Empfangs für die eine oder die mehreren Wiederholungen, die mit den zweiten Ressourcen überlappen, oder einer Bestätigung ohne ein Bit für den ersten Empfang für die eine oder die mehreren Wiederholungen, die mit den zweiten Ressourcen überlappen.

11. Verfahren nach Anspruch 1, wobei das Bestimmen, ob der erste Empfang unter Verwendung der ersten Ressourcen empfangen werden soll, das Bestimmen des Empfangens wenigstens einer Wiederholung des ersten Empfangs aufweist, wobei das Verfahren weiterhin aufweist:
Bestimmen, dass die wenigstens eine Wiederholung des ersten Empfangs auf Ressourcen, die nicht mit den zweiten Ressourcen überlappen, wiederholt wird, und
Senden einer Bestätigung, die einen Empfangsstatus gemäß einem Decodierergebnis der wenigstens einen Wiederholung des ersten Empfangs, die nicht mit den zweiten Ressourcen überlappt, angibt.

12. Eine Vorrichtung (102/104) für eine drahtlose Kommunikation, aufweisend:
einen Speicher, der computerausführbare Befehle speichert, und
wenigstens einen Prozessor, der mit dem Speicher gekoppelt ist und konfiguriert ist zum Ausführen der Befehle für das Durchführen des Verfahrens gemäß einem der Ansprüche 1 bis 11.

## Revendications

1. Procédé (800) de communication sans fil, comprenant les étapes consistant à :
recevoir (810) un message programmant une première réception par un équipement d'utilisateur, UE, au moyen de premières ressources ;
recevoir (820) un premier indicateur programmant une première émission en liaison montante depuis l'UE sur des secondes ressources qui chevauchent au moins en partie les premières ressources ;
déterminer qu'il faut annuler la réception de la première réception sur les premières ressources au profit de la première émission en liaison montante programmée ;
recevoir (830) un second indicateur indiquant une région où certaines émissions en liaison montante au sein de la région sont annulées, la région comprenant la première émission en liaison montante, les premières ressources et une ou plusieurs autres émissions en liaison montante, ledit second indicateur annulant la première émission en liaison montante sur les secondes ressources qui chevauchent au moins en partie les premières ressources, le second indicateur n'annulant pas les une ou plusieurs autres émissions en liaison montante qui ne chevauchent pas au moins en partie les premières ressources ; et
déterminer (840) s'il faut recevoir la première réception sur les premières ressources, en réponse au fait que le second indicateur annule la première émission en liaison montante, sur la base de règles de réception.

2. Procédé selon la revendication 1, le premier message étant une configuration de programmation semi-persistante, SPS, programmant une réception périodique en liaison descendante.

3. Procédé selon la revendication 1, les premier et second indicateurs étant des informations de commande en liaison descendante.

4. Procédé selon la revendication 1, comprenant en outre l'étape consistant à émettre un acquittement indiquant un état de réception de la première réception en réponse à la détermination du fait qu'il faut recevoir la première réception.

5. Procédé selon la revendication 4, l'acquittement pouvant être soit un acquittement positif, soit un acquittement négatif.

6. Procédé selon la revendication 1, comprenant en outre l'étape consistant à émettre un acquittement négatif en réponse à la détermination du fait qu'il ne faut pas recevoir la première réception.

7. Procédé selon la revendication 1, comprenant en outre l'étape consistant à déterminer qu'il ne faut pas émettre d'acquittement en réponse à la détermination du fait qu'il ne faut pas recevoir la première réception.

8. Procédé selon la revendication 1, comprenant en outre les étapes consistant à :
recevoir la première réception au moyen de ressources, parmi les premières ressources, qui ne chevauchent pas les secondes ressources ; et
émettre un acquittement indiquant un état de réception selon un résultat de décodage de la première réception.

9. Procédé selon la revendication 1, comprenant en outre les étapes consistant à :
déterminer que la première réception n'est pas répétée ; et
émettre un acquittement négatif de la première réception ou un acquittement sans bit pour la première réception.

10. Procédé selon la revendication 1, le fait de déterminer s'il faut recevoir la première réception au moyen des premières ressources comprenant l'étape consistant à déterminer qu'il ne faut pas recevoir une ou plusieurs répétitions de la première réception, comprenant en outre les étapes consistant à :
déterminer que les une ou plusieurs répétitions de la première réception sont répétées sur des ressources qui chevauchent les secondes ressources ; et
émettre un acquittement négatif de la première réception pour les une ou plusieurs répétitions qui chevauchent les secondes ressources, ou un acquittement sans bit pour la première réception pour les une ou plusieurs répétitions qui chevauchent les secondes ressources.

11. Procédé selon la revendication 1, le fait de déterminer s'il faut recevoir la première réception au moyen des premières ressources comprenant l'étape consistant à déterminer qu'il faut recevoir au moins une répétition de la première réception, comprenant en outre les étapes consistant à :
déterminer que l'au moins une répétition de la première réception est répétée sur des ressources qui ne chevauchent pas les secondes ressources ; et
émettre un acquittement indiquant un état de réception selon un résultat de décodage de l'au moins une répétition de la première réception qui ne chevauche pas les secondes ressources.

12. Appareil (102/104) de communication sans fil, comprenant :
une mémoire stockant des instructions exécutables par ordinateur ; et
au moins un processeur couplé à la mémoire et configuré pour exécuter les instructions pour réaliser le procédé selon l'une quelconque des revendications 1 à 11.
